# EUROPEAN PATENT APPLICATION

(11) **EP 3 131 054 A1**
(43) Date of publication of application: **15.02.2017**
(21) Application number: 15777037.1
(22) Date of filing: 22.01.2015
(51) Int. Cl.: G06Q 50/20

(54) **CONCEPT-ASSOCIATED ONLINE STUDY SERVICE METHOD, AND SERVICE SYSTEM THEREFOR**

(30) Priority: 07.04.2014 KR 20140040979
(71) Applicant: Kim, Yongwon, Changwon-si, Gyeongsangnam-do 641-850 (KR); Kim, Younggon, Changwon-si, Gyeongsangnam-do 631-872 (KR)
(72) Inventor: Kim, Yongwon, Changwon-si, Gyeongsangnam-do 641-850 (KR); Kim, Younggon, Changwon-si, Gyeongsangnam-do 631-872 (KR)
(74) Representative: Fleck, Hermann-Josef
(86) International application number: PCT/KR2015/000662
(87) International publication number: WO 2015/156483

(57) **Abstract**

The present invention relates to a new type concept-associated online study service method and a service system therefor, which provide explanations on specific questions from a variety of perspectives, thereby enhancing a user's concept understanding and enabling a user-customized education. To this end, the present invention provides a concept-associated online study service method conducted by comprising: a user identification step for identifying, from log-in information of a user accessing an online service website, which type between a student member and a teacher member the user is registered as; a question providing step for, when a service request is generated by any one user among users registered as student members or teacher members, extracting and providing a pre-registered study question; a material collecting step for receiving and storing an answer to the provided study question and explanation material of the solving process for deriving the answer uploaded by a user registered as a teacher member; and an information providing step for providing, via the service web-site, the stored answer for each question and the explanation material in accordance with the request of a user registered as a student member.

## Description

The present invention relates to a new type of concept-associated online study service method capable of enhancing conceptual understanding of a user while enabling a user-customized education by providing explanations about a certain study question from various viewpoints, and a service system therefor.

Generally, an online study service is a service for providing education content online such that a user (for example, a student) may freely use the education content without restriction on time and place.

The online study service is generally performed such that when a server operator registers education content in a web server, a user (for example, a student) selects and receives the education content. The relevant technologies are suggested in various methods as disclosed in Korean Patent Unexamined Publication No. 10-2000-49914, Korean Patent Registration No. 10-557304, Korean Patent Registration No. 10-596687, and Korean Patent Unexamined Publication No. 10-2011-10037.

However, the above-described conventional online study service has a problem in that it performs studying for a user with only a question and an answer that are simply provided by a server operator so when a question registered by the server operator has an error or the question is not sufficiently explained, and faulty studying is performed by the user not precisely recognizing the question.

In addition, since the above-described conventional online study service provides a question and an answer without precisely identifying a level of a user so even though an answer is provided based on the level of the user, the user may have difficulty in understanding the concept of the question, thereby resulting in degradation of an actual studying effect.

The present invention is directed to providing a new type of concept-associated online study service method capable of enhancing conceptual understanding of a user while enabling a user-customized education by providing explanations about a certain study question from various viewpoints, and a service system therefor.

One aspect of the present invention provides a concept-associated online study service method that is a service method performed by an online service server which provides a studying service through an online service website, the service method including: a user identification step of identifying a type of a user registered as one of a student member and a teacher member from log-in information of a user who logs into the online service website; a question providing step of extracting a preregistered study question and providing the extracted study question when a request for a service from a user registered as one of a student member and a teacher member occurs; a material collecting step of receiving an answer to the provided study question and explanation material of a solving process for deriving the answer that are uploaded from a user registered as a teacher member, and storing the received answer and the received explanation material; and an information providing step of providing the stored answer and the stored explanation material for each study question through the service website according to a request from a user registered as a student member.

The question providing step may be performed by extracting a study question corresponding to the type of the user which is identified in the user identifying step, a subject, and a level, and providing the extracted study question.

Whether an answer matches an actual answer may be checked before the answer to a problem and explanation material of a solving process for the answer are uploaded and received from the user registered as the teacher member in the material collecting step, and the answer to the problem and the explanation material of the solving process for the answer may be allowed to be uploaded only when the answer matches the actual answer.

The stored answer and the stored explanation material of a solving process for each study question provided according to the request from the user in the information providing step may be classified according to teacher members and solution types and may be provided as a list linking to a website on which data about the classified information is located such that the user registered as the student member selects a link on the list and executes the selected link.

The service method may further include: a process of receiving details of a question from the user registered as the student member so that the received details of the question are registered; a process of receiving response material for the registered details of the question uploaded from one or more users registered as teacher members so that the received response material is registered; a process of classifying the registered response materials according to solution types and providing the classified response materials as a list linking to a website on which data about the classified information is located; and a process of providing requested response material when a student user who has registered the details of the question requests one of the response materials on the list.

Another aspect of the present invention provides a concept-associated online study service system including: an information storage including a problem information database in which data of information about a study question for each subject is stored, a commentary information database in which data of an answer to the study question for each subject and commentary information about the study question for each subject are stored, and a log-in information database in which data of log-in information of a student member and a teacher member is stored; an information classifier configured to receive an answer to a certain study question and explanation material of a solving process for the answer, and to classify the received answer and the received explanation material according to solution types; and an online service server programmed to provide a user registered as a student member with a study question, an answer to the study question, and a plurality of explanation materials for the study question classified according to solution types, and provide a user registered as a teacher member with material related to the study question and receive the answer to the study question and the explanation material of the solving process for the study question from the user registered as the teacher member, while operating an online web-site or wap-site.

As described above, the concept-associated online study service method according to the present invention and the service system therefor provide a solving process of each study question from various viewpoints when performing a studying service for a student user in regards to certain studying content so that the student user can precisely understand the concept of the studying content while studying associated concepts of the studying content, thereby resulting in efficient studying.

In addition, the concept-associated online study service method according to the present invention and the service system therefor allow a student user to select explanation material for each solving process so that the student user can perform self-directed studying, thereby further enhancing the studying efficiency.
- FIG. 1: is a block diagram schematically illustrating a concept-associated online study service system according to an exemplary embodiment of the present invention.
- FIG. 2: is a flowchart schematically showing a concept-associated online study service method according to an exemplary embodiment of the present invention.
- FIG. 3: is a flowchart schematically showing another example of a concept-associated online study service method according to an exemplary embodiment of the present invention.

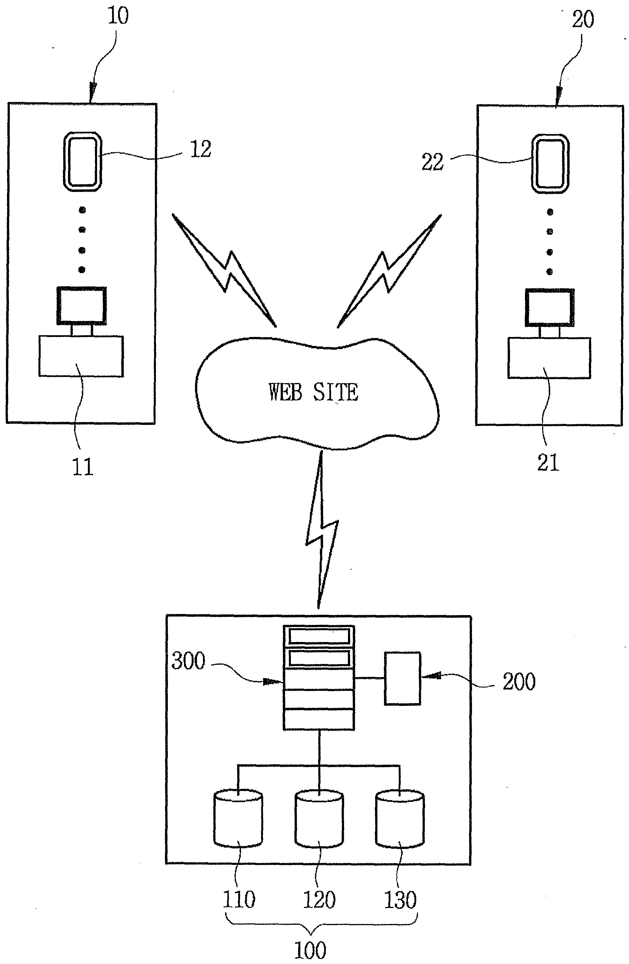

Hereinafter, a concept-associated online study service method according to an exemplary embodiment of the present invention and a service system therefor will be described with reference to FIGS. 1 to 3 attached herewith.

FIG. 1 attached herewith is a block diagram schematically illustrating a concept-associated online study service system according to an exemplary embodiment of the present invention.

As can be seen in FIG. 1, the concept-associated online study service system according to an exemplary embodiment of the present invention broadly includes an information storage 100, an information classifier 200, and an online service server 300, and the concept-associated online study service system is mainly characterized in that it provides a service for classifying each user into a student member and a teacher member and registering the classified users, providing a student member with a study question for each subject and explanation material of a solving process for deriving an answer to the study question, and receiving explanation material of a solving process individually created by a teacher member from the teacher member such that the received explanation material is registered, thus the student member may receive a solving process in various viewpoints rather than a certain single viewpoint, thereby enabling the student member to precisely recognize a concept of the study question.

The concept-associated online study service system is described for each component in detail.

First, the information storage 100 is a part in which various types of information data are stored.

The information storage 100 includes a question information database 110, a commentary information database 120, and a log-in information database 130.

The question information database 110 is a database in which data of information about a study question for each subject is stored, and the commentary information database 120 is a database in which an answer to the study question for each subject and explanation material of a solving process for the study question are stored in the form of data.

In this case, the question information database 110 is constructed to enable a download of a study question by a user, and the commentary information database 120 is constructed to enable not only a download of the study question by the user but also an upload of explanation material of a solving process by the user.

The log-in information database 130 is a database in which data of log-in information about a student member and a teacher member are stored, and the log-in information database 130 is constructed to disallow acquisition of information by a user. In this case, the teacher member represents an undergraduate, a student having a bachelor degree or higher, an instructor of a private institute, or a schoolteacher. However, the teacher member of the present invention is not limited thereto.

The information storage 100 may additionally store various pieces of information data for providing an online service, and detailed description thereof will be omitted because it is general knowledge.

The information classifier 200 is a program programmed to classify various pieces of information and store the classified information in each database 110, 120, and 130 of the information storage 100.

In particular, the present exemplary embodiment of the present invention is characterized in that the information classifier 200 receives an answer to a certain study question and explanation material of a solving process for the study question from a user terminal 10 or 20 logged in to an online web-site or wap-site provided by the online service server 300, and classifies the received answer and the received explanation material based on a predetermined solution type.

In this case, the user terminal 10 or 20 may be divided into a student terminal 10 possessed by a student user or a teacher terminal 20 possessed by a teacher user, and may be implemented as one of an Internet-capable computer 11 or 21 or mobile terminal 12 or 22.

The solution type represents a solution form using equations, formulas, and laws that are generally known, and may further include a user-designated solution type. When the solution type is a user-designated solution type, the information classifier 200 is programmed to allow a user to designate a solution type directly.

Next, the online service server 300 is a server that operates an online service website.

The online service server 300 is constructed such that when the user terminals 10 and 20 access the online service server 300 to enable internet communication therewith, online services for displaying various types of general information, linking to each webpage, and uploading and downloading material are provided.

In particular, the present exemplary embodiment of the present invention is characterized in that the online service server 300 is programmed to provide a user registered as a student member (hereinafter, referred to as a "student user") with studying content, a study question related to the studying content, an answer to the study question, and explanation material of a solving process for the answer, and provide a user registered as a teacher member (hereinafter, referred to as a "teacher user") with material related to the study question while allowing an answer to the study question and the explanation material of the solving process for deriving the answer to be uploaded by the teacher user. For example, the study question according to the present invention represents a study question for each subject registered by a service operator. However, the study question according to the present invention may represent a study question registered in an item pool or an educational institute.

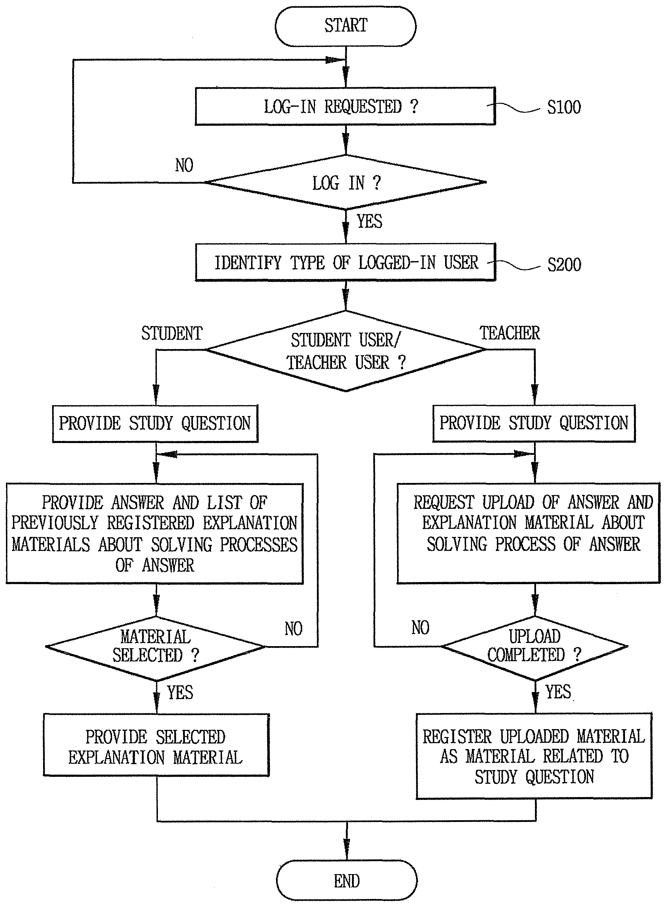

Hereinafter, a studying service method using a concept-associated online study service system according to an exemplary embodiment of the present invention will be described for each service process performed by the online service server 300 with reference to FIG. 2.

First, the online service server 300 requests a login of a user who accesses an online service website (S100).

When the login of the user is achieved according to the request, the online service server 300 identifies a type of the user as one of a student user and a teacher user based on log-in information of the user who has logged in (S200).

The identification of the type of the logged-in user is identified while interworking with the log-in information database 130 of the information storage 100. That is, the type of the user is identified by comparing the information logged in by the user with each login information registered in the log-in information database 130.

Of course, for a user identified as a student user, the online service server 300 additionally identifies an academic level of the student user, and information for the identified academic level is used as reference information for extracting a study question in the online study.

In addition, when the type of the logged-in user is identified through the above-descried process, the online service server 300 controls providing a service that is commonly provided regardless of the identified user type and a service that is distinguished by the identified user type.

Here, the commonly provided service is a service for providing an explanation of studying content for each subject or associated study questions. The service is performed in a manner such that when a request for the service is made by one of the student user and the teacher user, the online service server 300 extracts a study question for each subject previously registered in the problem information database 110 and explanation material for each study question previously registered in the commentary information database 120 so that the extracted study question and the extracted explanation material are displayed. In this case, the online service server 300 may extract a study question corresponding to a subject and an academic level identified by the above described log-in process (a user identification step) and provide the extracted study question, thereby providing a service according to the level and an academic achievement of the user.

In addition, the service distinguished by the user type is a service for providing studying content, such as various types of information and material for studying each subject when the logged-in user is a student user. The service distinguished by the user type is a service for controlling such that the teacher user directly uploads explanation material about a solving process of a study question for each subject when the logged-in user is the teacher user.

In addition, while the service is being provided, the online service server 300 receives an answer to a study question and/or a solving process for deriving the answer that is input through a service website.

In this case, when the received answer represents an answer and a solving process input by a student user, the online service server 300 determines correctness/incorrectness of the answer and an error of the solving process, and informs the student user of a result of the determination while additionally providing the student user with a plurality of pieces of explanation material about the solving process of an academic solution which are registered in the commentary information database 120. In this case, the explanation material may be at least one of material registered by one or more teacher users and material previously registered by a server operator.

Accordingly, the student user may acquire the solving process from various viewpoints, thereby providing a service for not only providing an answer simply but also associating concepts that are not known by the student user to enable restudying.

In addition, the online service server 300 registers details of solving a study question submitted by a student user in the log-in information database 130 such that the registered details are used as material for evaluating an academic level of the student user.

When the received answer is an answer input by a teacher user, the online service server 300 determines correctness/incorrectness of the answer and requests the teacher user to classify the answer and explanation material about a solving process for the study question according to solution types and to upload the classified answer and explanation material, and then the online service server 300 registers the uploaded material in the commentary information database.

In this case, the explanation material about the solving process includes at least one of an image, a voice, and a text that are created by the teacher user, and the explanation material guides the teacher user to designate a type of the explanation material (for example, a type of an equation applied to the solving process or a characteristic of the explanation) so that classification according to solution types is achieved through interworking with the information classifier 200.

In addition, when a teacher user registers information material about an explanation, the online service server 300 enables the teacher user to view explanation material registered by other teacher users, thereby minimizing duplication of the same material or similar material.

In addition, the online service server 300 provides a service such that when the logged-in user is a teacher user, the user additionally uploads an applied study question related to a basic study question provided through the online service server 300 and explanation material of a solving process for the study question, and the online service server 300 allows data about the explanation material uploaded as such to be registered in the commentary information database 120 and thus be provided as various applied study questions related to a certain study question so that a student user is guided to have precise conceptual arrangement of the basic study question. That is, not only studying between the online service server 300 and a student user but also studying between the student user and a teacher user is additional performed so that the present invention serves as a mediator for a studying service between users.

In addition, the online service server 300 provides a service such that when the logged-in user is a teacher user, the user combines some of study questions uploaded by other teacher users that are extracted based on type with a study question uploaded by the user so that individual management is achieved.

Of course, the present invention may provide a selective sharing function that prevents a study question uploaded by a teacher user from being shared with other teacher users to relieve a burden of preparing a test paper, an assessment form, and a follow-up instruction form as routine work when the teacher user is a schoolteacher. Meanwhile, upon a request by a student user, an answer to a certain study question and explanation material for a solving process for the study question registered in the log-in information database 130 through the above described process are provided through a service website through control of the online service server 300.

In this case, the answer and the explanation material of the solving process for each study question that are provided according to the request by the student user are classified according to teacher users and according to solution types, and are provided as a list linking to a website on which data about the classified information is located so that the user may precisely select only a desired piece of information and execute the selected information. The present invention may be operated to recommend a student user explanation material which provides a quality explanation on concepts and is registered in the commentary information database 120.

In addition, the online service server 300 may provide a service such that a student user may additionally search for other explanation materials about a solving process created by a teacher user who has uploaded the explanation material by checking explanation material of the solving process so that the student user may establish a mentor mentee relationship by designating a teacher user who provides an explanation that is the most suitable for the user's level and the user's learning style. In this case, the teacher user designated as the mentor is assigned a right to refer to an academic achievement and a level of the student user designated as the mentee.

In particular, the online service server 300 may allow the teacher user designated as the mentor to check answers to study questions being solved by students in an online network during an online studying of student users designated as mentees, and may allow a question item for a study question solution and an explanation lecture to be numbered and checked individually by each student for management.

In addition, the present invention may further include a process of subtracting a predetermined mileage from a student user who has selected explanation material of a solving process while adding the predetermined mileage to a teacher user who registered the explanation material selected by the student user, thereby promoting active participation of teacher users.

Meanwhile, the concept-associated online study service method according to the present invention is not limited to the above description.

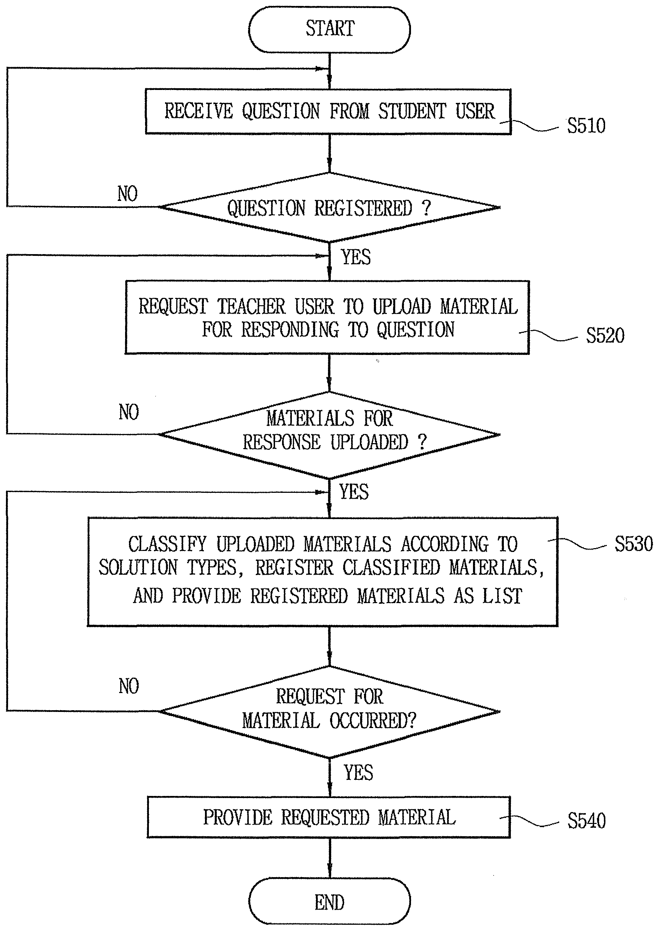

For example, referring to FIG. 3 attached herewith, the present invention may receive a question about studying content from a student user such that the question is registered (S510), receive response material for the registered question which is uploaded from one or more teacher users and register the received response materials (S520), classify the received and registered response materials according to solution type and provide the classified response material as a list linking to a website on which data about the classified information is located (S530), and provide the response material (S540) when a student user having registered details of the question requests one of the response materials on the list.

In addition, student users of the same age having the same level (level or rank) may be allowed to take examinations with the same study questions collectively, thereby providing a small contest service in which a student user with an excellent academic score is given additional mileage.

As described above, the concept-associated online study service method according to the present invention may provide a studying service in various ways.

Accordingly, the concept-associated online study service method according to the present invention and the service system therefor provide a study question solving process of each study question from various viewpoints when performing a studying service for a student about certain studying content so that the student user can precisely understand the concept of the studying content while studying associated concepts of the studying content, thereby resulting in efficient studying.

In addition, the concept-associated online study service method according to the present invention and the service system therefor allow a student user to select explanation material about each solving process so that the student user can conduct self-directed studying, thereby further enhancing studying efficiency.

## Claims

1. A concept-associated online study service method that is a service method performed by an online service server which provides a studying service through an online service website, the service method comprising:
a user identification step of identifying a type of a user registered as one of a student member and a teacher member from log-in information of a user who logs into the online service website;
a question providing step of extracting a preregistered study question and providing the extracted study question when a request for a service from a user registered as one of a student member and a teacher member occurs;
a material collecting step of receiving an answer to the provided study question and explanation material of a solving process for deriving the answer that are uploaded from a user registered as a teacher member, and storing the received answer and the received explanation material; and
an information providing step of providing the stored answer and the stored explanation material for each study question through the service website according to a request from a user registered as a student member.

2. The concept-associated online study service method of claim 1, wherein the question providing step is performed by extracting a study question corresponding to the type of the user which is identified in the user identifying step, a subject, and a level, and providing the extracted study question.

3. The concept-associated online study service method of claim 1, wherein whether an answer matches an actual answer is checked before the answer to a question and explanation material of a solving process for the answer are uploaded and received from the user registered as the teacher member in the material collecting step, and the answer to the problem and the explanation material of the solving process for the answer are allowed to be uploaded only when the answer matches the actual answer.

4. The concept-associated online study service method of claim 1, wherein the stored answer and the stored explanation material of a solving process for each study question provided according to the request from the user in the information providing step are classified according to teacher members and solution types and are provided as a list linking to a website on which data about the classified information is located such that the user registered as the student member selects a link on the list and executes the selected link.

5. The concept-associated online study service method of claim 1, further comprising:
a process of receiving details of a question from the user registered as the student member so that the received details of the question are registered;
a process of receiving response material for the registered details of the question uploaded from one or more users registered as teacher members so that the received response material is registered;
a process of classifying the registered response material according to solution types and providing the classified response materials as a list linking to a website on which data about the classified information is located; and
a process of providing requested response material when a student user who has registered the details of the question requests one of the response materials on the list.

6. A concept-associated online study service system comprising:
an information storage including a problem information database in which data of information about a study question for each subject is stored, a commentary information database in which data of an answer to the study question for each subject and commentary information about the study question for each subject are stored, and a log-in information database in which data of log-in information of a student member and a teacher member is stored;
an information classifier configured to receive an answer to a certain study question and explanation material of a solving process for the answer, and to classify the received answer and the received explanation material according to solution types; and
an online service server programmed to provide a user registered as a student member with a study question, an answer to the study question, and a plurality of explanation materials for the study question classified according to solution types , and provide a user registered as a teacher member with material related to the study question and receive the answer to the study question and the explanation material of the solving process for the study question from the user registered as the teacher member, while operating an online web-site or wap-site.
